# EUROPEAN PATENT APPLICATION

(11) **EP 3 135 868 A1**
(43) Date of publication of application: **01.03.2017**
(21) Application number: 15182669.0
(22) Date of filing: 27.08.2015
(51) Int. Cl.: F01D 11/00, F01D 11/02, F16J 15/44

(54) **SERIAL ARRANGEMENT OF RETRACTABLE ROTOR SEALS**

(71) Applicant: Doosan Skoda Power S.r.o., 30128 Plzen (CZ)
(72) Inventor: Hasnedl, Dan, 301 00 Plzen (CZ)
(74) Representative: Musil, Dobroslav

(57) **Abstract**

The invention relates to a serial arrangement of retractable rotor seals in circumferential grooves in a stator of a turbine, whereby at least one of the retractable rotor seals (1) is in its comb (10) provided with at least one connecting means which loosely extends into the space between the rotor (4) of the turbine and the adjacent axial surface (100) of the comb (10) of the neighbouring retractable seal (1), or to the allotted portion of the comb (10) of the neighbouring retractable seal (1).

## Description

### Technical field

The invention relates to a serial arrangement of retractable rotor seals in circumferential grooves in a stator of a turbine.

The invention also relates to a retractable rotor seal with a comb.

### Background art

For mutual sealing of pressurized and underpressure spaces of a turbine and for sealing them against atmospheric pressure, numerous different types of rotor seals (packings) are currently used, as well as methods of their arrangement. In order to avoid mechanical damage of the turbine due to increasing vibrations when the turbine passes through the critical speed of the rotor, for example, during the start-up of the rotor, since seals are always designed with a minimum possible gap between the rotor and the stator, particularly movable (retractable) seals are used, which are during the start-up of the turbine retracted from the rotor (they are in an open position), moving towards it (they get closed) only after passing through the critical speed or after reaching the operating speed of the turbine. Moreover, their movement is enabled by the fact that they are divided into several circumferential segments (generally 4 to 8), whereby the movement of each of these segments is usually evoked by springs and the pressure of the sealed medium.

When sealing a medium under a high pressure, or when two spaces with a great difference of pressure between them are mutually sealed, it is usually necessary to use several movable rotor seals arranged in series next to one other to achieve a desired sealing effect. However, the movable rotor seals thus arranged exhibit unstable behaviour, since if for some reason (e.g. aerodynamic, due to production tolerances, uneven heating of the seal, etc.) only one seal will be closed, this closed seal will effectively inhibit the proper functioning of the other seals in the series, since it has a considerably smaller clearance and therefore the pressure drop of the whole seal is realized on it instead of being distributed between all the seals. As a result, the other seals will remain retracted from the shaft (in an open position), due to which the desired seal effect is not achieved.

The goal of the invention is to propose a serial arrangement of retractable rotor seals which would ensure their reliable functionality.

### Principle of the invention

The goal of the invention is achieved by a serial arrangement of retractable rotor seals in circumferential grooves in a stator of a turbine, whose principle consists in that at least one of the retractable rotor seals is on its comb provided with at least one connecting means which loosely extends into the space between the rotor of the turbine and the adjacent axial surface of the comb of the neighbouring retractable seal, or to an allotted portion of the comb (e.g. a groove) of the neighbouring retractable seal. Due to this, the retractable seal, which starts to move towards the rotor of the turbine (to close), first presses against the connecting means of at least one neighbouring retractable seal, or by its connecting means presses against the comb of at least one neighbouring retractable seal, by which means the neighbouring retractable seal is set in motion. At the same time, each retractable seal may move freely, independently of the neighbouring retractable seals in an axial direction, for example into its sealing position, i.e. when it presses by its comb against the partition separating the circumferential grooves for neighbouring seals, and preferably, in case of need, also in a radial direction away from the rotor of the turbine (i.e. in an open position).

If the connecting means loosely extends into the space between the rotor of the turbine and the adjacent axial surface of the comb of the neighbouring retractable seal, it can loosely lean against this axial surface, taking up minimum of this space.

In an advantageous variant of embodiment, the connecting means extends into an axial groove in the adjacent face of the comb of the neighbouring retractable seal.

A suitable connecting means is especially pointed or curved sheet-metal extension piece, which is by one of its arms connected to the comb of the retractable seal, and by its other arm it loosely extends into the space between the rotor of the turbine and the adjacent axial surface of the comb of the neighbouring retractable seal, or an axial protrusion arranged on the face of the retractable seal, which loosely extends into the space between the turbine rotor and the adjacent axial surface of the comb of the neighbouring retractable seal, or into an axial groove in the adjacent face of the comb of the neighbouring retractable seal. At the same time, the axial protrusion can be disposably or undisposably connected to the retractable seal, more preferably, however, it constitutes an integral part of it.

In case of need to improve the sealing effect of the retractable rotor seal, on an axial surface of the axial protrusion, which loosely extends into the space between the turbine rotor and the adjacent axial surface of the comb of the neighbouring retractable seal, at least one sealing fin extending towards the rotor is arranged..

For the same reason, at least one sealing fin can be arranged on turbine rotor and extending towards the connecting means.

The axial groove, into which the connecting element extends, is preferably closed from the side of the turbine rotor, so that the connecting means during a radial movement of the retractable seal presses against one or the other of its walls, thus setting this seal in motion in a respective radiant direction. Preferably, the width of the closed axial groove is greater than the height of the axial protrusion, which allows movement of the retractable seal with the connecting element to a certain extent in relation to the seal with the groove.

So as to avoid a situation when the connecting means inhibits the penetration of the sealed medium into the circumferential grooves in the stator of the turbine, where this medium acts on the outer surface of the individual retractable seals and moves them or makes them move towards the rotor of the turbine, this element is arranged only along a part of the circumference of a segment of the seal and/or is divided into at least two parts, separated by a gap, and/or is provided with at least one through-hole and/or recess.

In a specific variant of embodiment, at least one retractable seal is provided with at least one connecting means, which extends to the space between the turbine rotor and the adjacent axial surface of the comb of the neighbouring retractable seal, or to an axial groove in the adjacent face of the comb of the neighbouring retractable seal on each face of its comb.

In addition, the aim of the invention is also achieved by a retractable rotor seal which contains a comb, whose principle consists in that at least on one face of the comb is arranged at least one pointed or curved extension piece, which is by one of its arms connected to the comb and by the other arm it is directed into the space beside the comb of the retractable seal, or on at least one face of the comb of the retractable seal is arranged at least one axial protrusion which is directed to the space beside the comb, or on at least one face of its comb is arranged at least one axial groove.

Furthermore, at least one pointed or curved extension piece or at least one axial protrusion is arranged either along the entire length of a segment of the retractable seal, or only along a part of it.

In both variations, the extension piece can be - should need arise - provided with at least one through-hole and/or recess which ensures the penetration of the sealed medium to the circumferential grooves in the stator of the turbine, where this medium acts on the outer surface of the individual retractable seals, and moves them or makes them move towards the turbine rotor.

The axial groove in the face of the comb of the retractable seal is preferably closed from the side of the axial surface of the comb of the retractable seal, and so the axial protrusion of the neighbouring retractable seal can press against its wall both during the movement towards the rotor and during the movement away from the rotor.

In case of need to achieve a required sealing effect, at least one sealing fin is arranged on the axial protrusion of the retractable seal.

### Description of drawings

In the enclosed drawings, Fig. 1 schematically represents a cross-section of a variant of a serial arrangement of retractable rotor seals according to the invention, Fig. 2 shows a cross-section of the second variant of a serial arrangement of retractable rotor seals according to the invention, Fig.3 shows a cross-section of the third variant of a serial arrangement of retractable rotor seals according to the invention, Fig.4 shows a cross-section of the fourth variant of a serial arrangement of retractable rotor seals according to the invention, Fig.5 shows a cross-section of the fifth variant of a serial arrangement of retractable rotor seals according to the invention, Fig.6 is a view of the first variant of a segment of the retractable rotor seal according to the invention, Fig.7 a view of the second variant of a segment of the retractable rotor seal according to the invention, Fig.8 is a view of the third variant of a segment of the retractable rotor seal according to the invention, Fig.9 is a view of the fourth variant of a segment of the retractable rotor seal according to the invention, Fig.10a is a view of the fifth variant of a segment of the retractable rotor seal according to the invention, Fig.10b is a view of a segment of the retractable rotor seal according to the invention from the opposite side than in Fig.10a, Fig. 11 is a cross-section of the sixth variant of a serial arrangement of retractable rotor seals according to the invention, and Fig. 12 is a cross-section of the seventh variant of a serial arrangement of retractable rotor seals according to the invention.

### Specific description

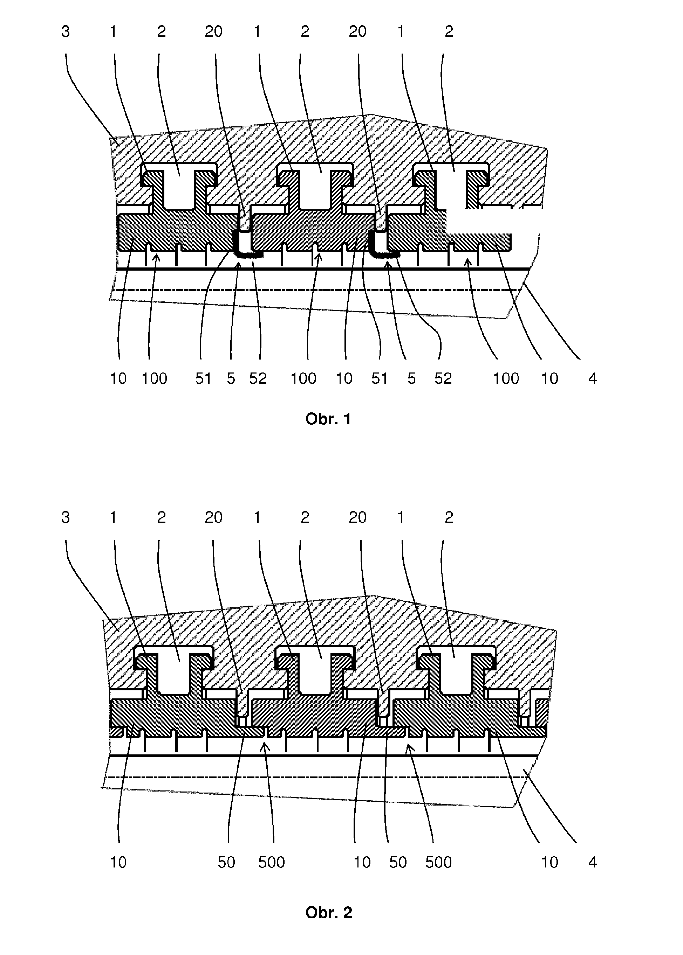

A serial arrangement of at least two retractable rotor seals **1** according to the invention is based on the arrangement of retractable rotor seals **1** of any known construction in circumferential grooves **2**, designed for this purpose, which are arranged next to one another and are formed in a stator **3** of a turbine. At least some of these retractable seals **1** are in the section of its comb **10** provided with a connecting means for their loose radial connection to the neighbouring retractable seal **1**, which loosely extends into the space between the comb **10** of the neighbouring retractable seal **1** and the rotor **4** of the turbine, or it is in contact with the comb **10** of the neighbouring retractable seal **1** or it extends into the allotted portion of the comb **10** of the neighbouring retractable seal **1** (e.g. a groove). Such a means is, e.g., a pointed or curved (preferably sheet-metal) extension piece **5** (Fig.1), which is by one of its arms **51** connected to the comb **10** of the retractable seal **1** (preferably to its face, although it can also be connected, e.g., to its axial surface), and by the other arm **52** it loosely extends into the space between the rotor **4** of the turbine and the adjacent axial surface **100** of the comb **10** of the neighbouring retractable seal **1**, or it loosely leans against this axial surface **100**. This extension piece **5** is arranged on each segment of the retractable seal **1**. Preferably, it is arranged only on a part of the segment of the seal **1**, or divided into at least two separate parts, whereby the gaps between the individual extension pieces **5** and/or between the parts of the extension pieces **5** enable the passage of the sealed medium to the circumferential grooves **2**, where this medium acts on the outer surface of the individual retractable seals **1** and moves them or makes them move towards the rotor **4** of the turbine. If the gaps between the individual extension pieces **5** and, possibly, also between parts of the extension piece/pieces **5** are too small, at least some of the parts of the extension piece **5** are for this purpose preferably provided with at least one non-illustrated through-hole and/or recess.

The extension piece **5** may be designed as one body arranged along the given part of the circumference of the turbine, or along the length of a segment of the retractable seal **1**, or as a group of interconnected or not interconnected bodies, such as protrusions, hooks, etc., which are arranged next to each other along the given part of the circumference or, in case of need, along the entire circumference of the turbine.

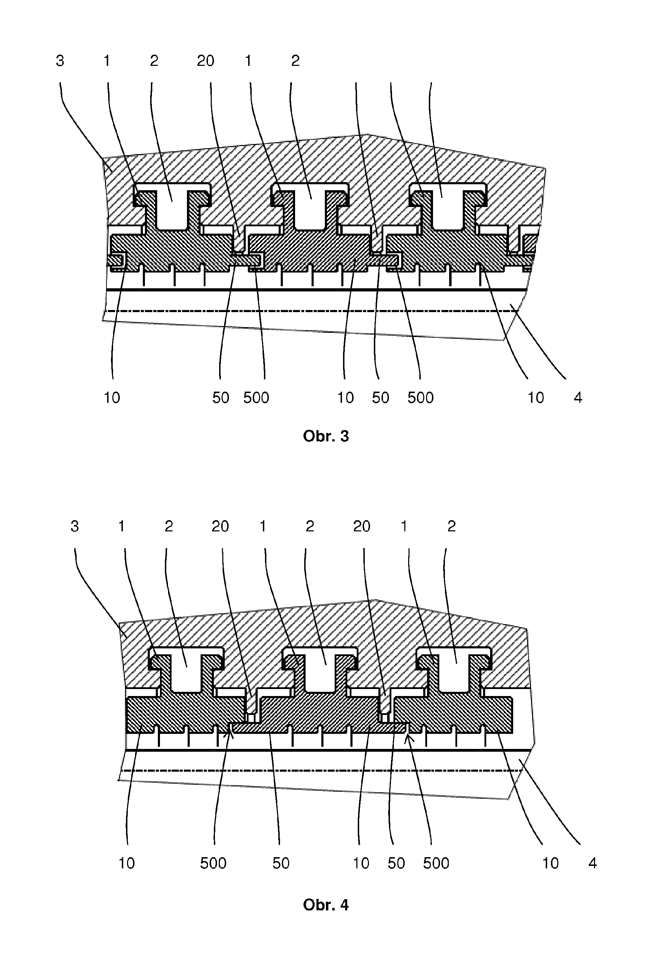

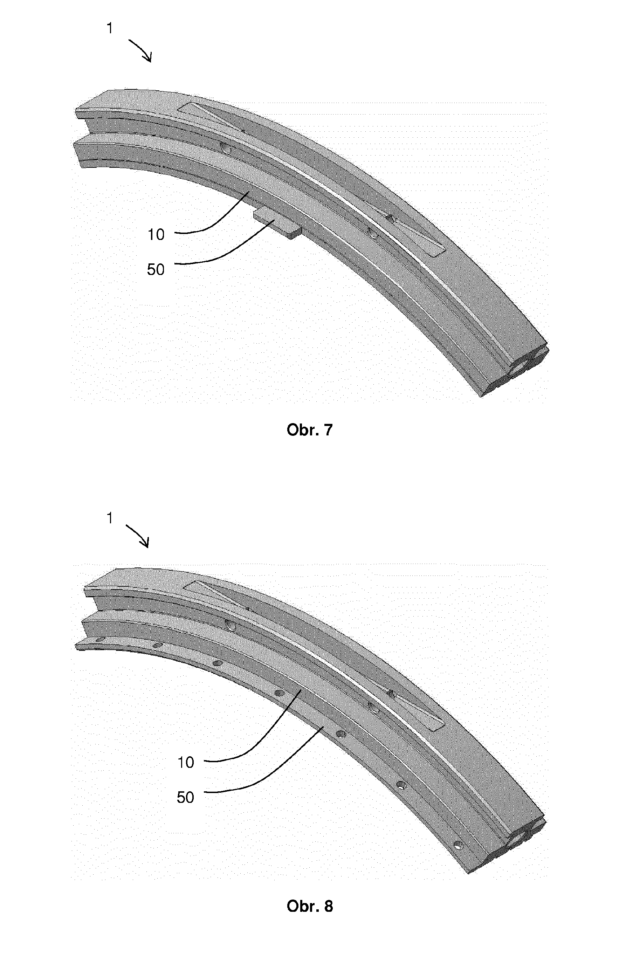

In other alternative embodiments, the connecting means can be an axial protrusion **50** arranged on the face of the comb **10** of the retractable seal **1**, which loosely extends into the space between the rotor **4** of the turbine and the adjacent axial surface **100** of the comb **10** of the neighbouring retractable seal **1**, or which extends into the axial groove **500** formed in the adjacent face of the comb **10** of the neighbouring retractable seal **1** (Fig.2). At the same time, this axial protrusion **50** may be arranged in a plane with the axial surface **100** of the comb **10** of the retractable seal **1** adjacent to the rotor **4** of the turbine, or, optionally, outside of it. In another alternative embodiment (Fig.3), such an axial protrusion **50** in the adjacent face of the comb **10** of the neighbouring retractable seal **1** is aligned with an axial groove **500,** which is closed from the side of the rotor **4** of the turbine, the width of this groove **500** being preferably greater than the height of the axial protrusion **50**. Consequently, this protrusion **50** may move to a certain extent in the axial groove **500** if the whole seal **1** is moving, without the protrusion being in contact with its walls, which enables to a certain extent a mutual movement of the neighbouring retractable seals **1** in a radial direction. In an non-illustrated variant of embodiment, the retractable seal **1** may be on the given face of the comb **10** provided with more axial protrusions **50**, and the neighbouring retractable seal **1** may be provided with a corresponding number of axial grooves **500**, or each seal may be provided both with axial protrusions **50** and axial grooves **500.** Also, the axial protrusion/protrusions **50** may be an integral part/integral parts of the particular retractable seal **1**, or it/they may be an independent element/independent elements, which is/are disposably or undisposably connected to the retractable seal **1**. The axial protrusion/axial protrusions **50** is/are preferably arranged only along parts of the circumference of the turbine or along the length of the particular segment of the retractable seal **1** (see e.g. Fig. 7, 9, 10a and 10b), or it is/they are provided with at least one through-hole and/or recess (see e.g. Fig.8), which ensures the passage of the sealed medium to the circumferential grooves **2**, where this medium acts on the outer surface of the individual retractable seals **1** and moves them or makes them shift towards the rotor **4** of the turbine.

In the alternative shown in Fig.4, one of the retractable seals **1** is provided with an axial protrusion **50** on both faces of its comb **10**, whereby both neighbouring retractable seals **1** are provided on the adjacent faces of their combs **10** with corresponding axial grooves **500**. This means that in this variation, two different types of retractable seals **1** alternate regularly with one another, being situated next to one another, whereas in the above-described variants there is usually one type of seal **1** which is typically repeated. In all the variants, the end retractable seal **1** does not have to contain any connecting means at the outer faces of its comb **10** (extension pieces **5** and/or axial protrusions **50** and/or grooves **500**). Analogically, it is possible to attach pointed or curved extension piece **5** to both sides of the comb **10** of the retractable seal **1**, or to use on both faces of the comb **10** of the retractable seal **1** another embodiment of a connecting means for loose radial connection to the neighbouring retractable seal **1**, whereby e.g. at least one of the axial protrusions **50** may extend into the space between the rotor **4** of the turbine and the adjacent axial surface **100** of the comb **10** of the neighbouring retractable seal **1**.

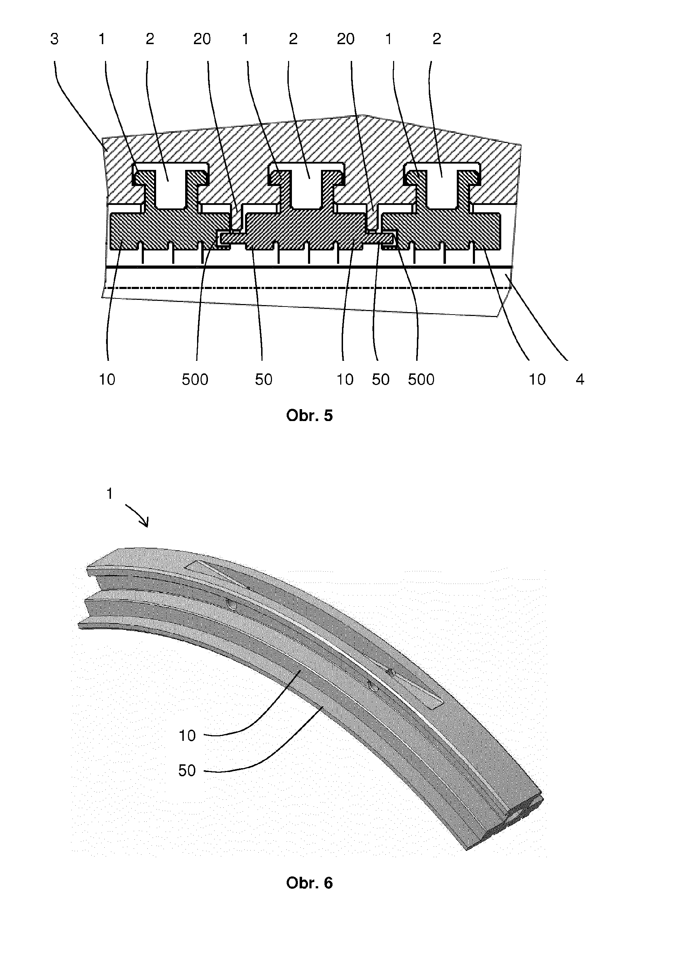

An advantageous variant of a serial arrangement of retractable seals **1** is shown in Fig. 5, whereby in this embodiment one of the retractable seals **1** is provided with an axial protrusion **50** on both faces of its comb **10** and both neighbouring retractable seals **1** are on the adjacent faces of their combs **10** provided with corresponding axial grooves **500**, which are closed from the side of the rotor **4** of the turbine.

In any alternative embodiment, the axial protrusion **50**/protrusions **50** may be made oblique, pointed or curved, preferably leading away from the rotor **4** of the turbine. Such shaping also corresponds to the shaping of a corresponding axial groove **500.**

The axial protrusion **50** may be designed as one body arranged along the given part of the circumference of the turbine, or as a group of mutually interconnected or not interconnected axial protrusions, which are arranged next to one another along the given part of the circumference, or along the entire circumference of the turbine, or along the given part of the circumference of a segment of the retractable seal **1**.

In an non-illustrated variation of embodiment, the extension piece **5** or axial protrusion **50** may contain a part which is directed against the axial surface **100** of the neighbouring retractable seal **1**, in which a circumferential groove or a hole/holes is/are formed for this part.

In this manner, the retractable seals **1** arranged next to one another are loosely radially connected, whereby the retractable seal **1**, which first starts to move towards the rotor **4** of the turbine (to close), which is usually (but not necessarily) the last retractable seal **1** in the direction of the movement of the sealed medium, presses against the connecting means of at least one neighbouring retractable seal **1** or by means of its connecting means presses against the comb **10** of at least one neighbouring retractable seal **1**, by which means this retractable seal **1** is set into motion. Due to this, in the particular phase of the turbine operation, all the retractable seals **1**, which are arranged in this manner and which are loosely interconnected, move substantially at the same moment, or close all the retractable seals. However, at the same time, each retractable seal **1** can loosely move in an axial direction, independently of the neighbouring retractable seals, e.g., to its sealing position, i.e. press by its comb **10** against the partition **20** separating the groove **2** for individual seals **1**, or, preferably, also in a radial direction away from the rotor **4** of the turbine (i. e. when opening). In the variant of a serial arrangement shown in Fig. 3 and 5 all the retractable seals **1** always move in both radial directions together.

A serial arrangement of retractable seals **1** according to the invention can be preferably combined with the arrangement of a retractable seal **1** according to CZ 305014.

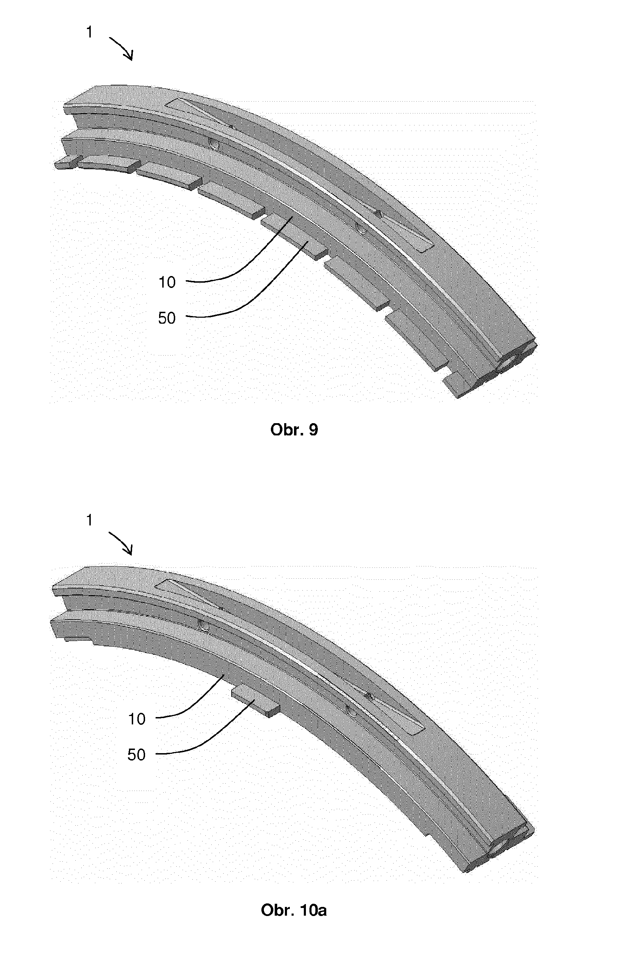

A retractable rotor seal **1** to implement the arrangement according to the invention contains a comb **10** and at least one pointed or curved extension piece **5**, which is by one of its arms **51** connected to the comb **10** of the seal **1**. (preferably to its face, although it can also be connected e.g. to one of its axial surfaces), and whose other arm **52** is directed to the space beside the comb **10** of the retractable seal **1,** or at least on one face of its comb **10** is arranged at least one axial protrusion **50**, which is directed to the space near the comb **10**. This axial protrusion **50** may be arranged along the entire length of a segment of the retractable seal **1** (see e.g. Fig. 6), or only along a part of it (see e.g. Fig.7). The extension piece **5**, or the axial protrusion **50**, is then preferably provided with at least one through-hole (see e.g. Fig.8) and/or recess, or it is along the length of the segment of the retractable seal **1** divided into several parts (see e.g. Fig.9), so that it would not inhibit the penetration of the sealed medium for circumferential grooves **2** of the turbine stator.

The counterpart, or more specifically, the neighbouring retractable seal **1** to this retractable seal **1** is preferably a retractable seal **1**, which is at least on one face of its comb **10** provided with at least one axial groove **500**, preferably with an axial groove **500**, which is closed from the side of the rotor **4** of the turbine, or from the side of the axial surface of the comb **10** of the retractable seal **1**.

In addition, one retractable seal may be provided **1** on one face of its comb **10** with an extension piece **5** and/or axial protrusion **50**, and on the same or opposite face of its extension piece with at least one axial groove **500**, preferably an axial groove **500**, which is closed from the side of the rotor **4** of the turbine, or from the side of the axial surface of the comb **10** of the retractable seal **1**.

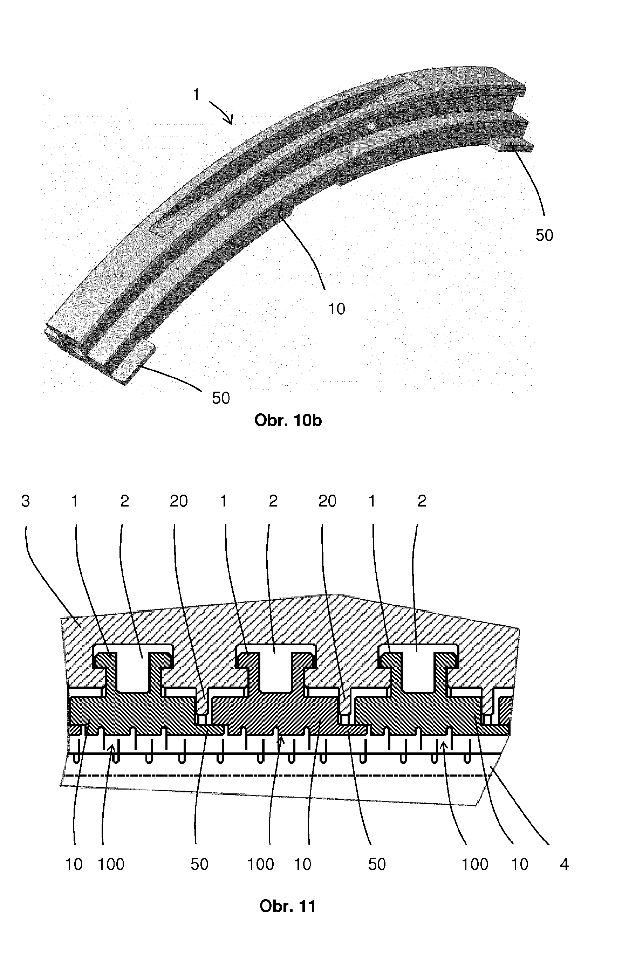

Fig. 10a and 10b show two views of a segment of the retractable seal **1** according to the invention for the arrangement according to Fig.4 or 5, which is provided with axial protrusions **50** on both faces of its comb **10**. In the illustrated variant of embodiment, this segment contains on one face of the comb **10** one axial protrusion **50** arranged in the middle and only along a part of its length (Fig.10a), and on the opposite face of its comb **10** it contains two axial protrusions **50** (Fig. 10b) arranged at its ends and separated by a gap. Nevertheless, in other non-illustrated variations of embodiment, the axial protrusions may be arranged **50** on the opposite faces of the comb **10** of the retractable seal **1** substantially in any other manner - or they may be formed by any variant of the above-described axial protrusion **50**.

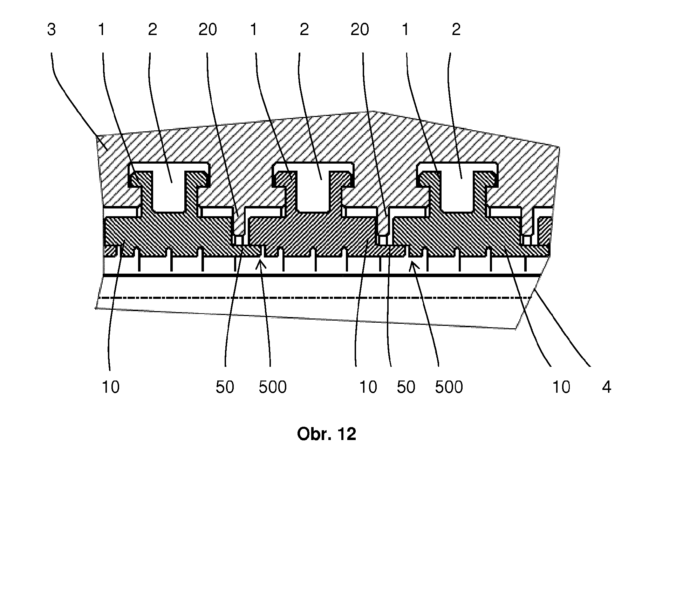

In variant of the serial arrangement of retractable rotor seals **1** according to the invention, when the connecting means for loose radial connection loosely protrudes into the space between the sealing comb **10** of the neighbouring retractable seal **1** and the rotor **4** of the turbine, an area of the axial surface **100** of the comb **10** adjacent to the rotor **4** of the turbine is reduced. Possible decrease of number of fins leads to lowering the sealing effect achieved. This can be, except of arrangement of required number of fins on given part of axial surface 100 of the comb 10 outside the contact with the connecting means, remedied by two basic ways of design improvement. Principle of the first of this improvements is that said missing sealing fin/fins is/are substituted by a sealing fin/fins arranged on the rotor **4** of the turbine in the area of the connecting means - see e.g. Fig. 11. This improvement could be used for all variants of the connecting means mentioned above and could be used also for variant when the connecting means protrude to the axial groove/grooves **500** of the neighbouring retractable seal **1**. The second improvement is arrangement of the given sealing fin/fins on the surface of the connecting means adjacent to the rotor **4** of the turbine. Application of this later improvement is limited namely to the variant of the connecting means formed by the axial protrusion **50**, advantageously by the axial protrusion **50**, which is integral part of the comb **10** of the retractable seal **1**, and which is arranged as uninterrupted protrusion on as long as possible part of the circumference of the turbine - e.g. see Fig. 12. In both variants, it is possible to achieve desired sealing effect by use of required number of sealing fins of any known design. In case when more than one sealing fin should be substituted, both design improvements mentioned above can be combined and, e.g., one fin could be arranged on the axial protrusion **50** and one fin on the rotor **4** of the turbine.

### List of references

- 1: retractable seal
- 10: comb of the retractable seal
- 100: axial surface of the comb of the retractable seal
- 2: circumferential groove of the stator of the turbine
- 20: partition
- 3: stator of the turbine
- 4: rotor of the turbine
- 5: pointed or curved extension piece
- 50: axial protrusion
- 500: axial groove
- 51: arm of the pointed or curved extension piece
- 52: arm of the pointed or curved extension piece

## Claims

1. A serial arrangement of retractable rotor seals in circumferential grooves in a stator of a turbine, **characterized in that** at least one of the retractable rotor seals (1) is on its comb (10) provided with at least one connecting means, which extends into the space between the rotor (4) of the turbine and the adjacent axial surface (100) of the comb (10) of the neighbouring retractable seal (1), or to the allotted portion of the comb (10) of the neighbouring retractable seal (1).

2. The serial arrangement according to claim 1, **characterized in that** the connecting means loosely leans against the axial surface (100) of the comb (10) of the neighbouring retractable seal (1).

3. The serial arrangement according to claim 1, **characterized in that** the connecting means extends into an axial groove (500) in the adjacent face of the comb (10) of the neighbouring retractable seal (1).

4. The serial arrangement according to claim 1 or 2, **characterized in that** the connecting means is a pointed or curved extension piece (5) which is by one of its arms (51) connected to the comb (10) of the retractable seal (1), and by the other arm (52) loosely extends into the space between the rotor (4) of the turbine and the adjacent axial surface (100) of the comb (10) of the neighbouring retractable seal (1).

5. The serial arrangement according to any of the claims 1 to 3, **characterized in that** the connecting means is an axial protrusion (50) arranged on the face of the comb (10) of the retractable seal (1), which loosely extends into the space between the rotor (4) of the turbine and the adjacent axial surface (100) of the comb (10) of the neighbouring retractable seal (1), or into the axial groove (500) in the adjacent face of the comb (10) of the neighbouring retractable seal (1).

6. The serial arrangement according to claim 5, **characterized in that** the axial protrusion (50) is an integral part of the retractable seal (1).

7. The serial arrangement according to claim 5 or 6, **characterized in that** there is at least one sealing fin arranged on a axial surface of the axial protrusion (50) loosely extending into the space between the rotor (4) of the turbine and the adjacent axial surface (100) of the comb (10) of the neighbouring retractable seal (1), which faces the rotor (4) of the turbine.

8. The serial arrangement according to any of the claims 1 to 7, **characterized in that** there is at least one sealing fin arranged on the rotor (4) of the turbine against the connecting means.

9. The serial arrangement according to claim 3 or 5, **characterized in that** the axial groove (500) is closed from the side of the rotor (4) of the turbine.

10. The serial arrangement according to any of the claims 1 to 5, **characterized in that** the connecting means is arranged along a part of the length of a segment of the retractable seal (1) and/or is divided into at least two parts separated by a gap and/or is provided with at least one through-hole and/or recess.

11. A serial arrangement according to any of the claims 1, 2, 3, 4, 5, 10, **characterized in that** at least one retractable seal (1) is on each face of its comb (10) provided with at least one connecting means, which extends into the space between the rotor (4) of the turbine and the adjacent axial surface (100) comb (10) of the neighbouring retractable seal (1), or into an axial groove (500) in the adjacent face of the comb (10) of the neighbouring retractable seal (1).

12. A retractable rotor seal which contains a comb, **characterized in that** on at least one face of the comb (10) is arranged at least one pointed or curved extension piece (5), which is by one of its arms (51) connected to the comb (10) and by the other arm (52) is directed to the space beside the comb (10) of the retractable seal (1), or on at least one face of the comb (10) of the retractable seal (1) is arranged at least one axial protrusion (50), which is directed to the space beside the comb (10).

13. The retractable rotor seal according to claim 12, **characterized in that** at least one pointed or curved extension piece (5), or at least one axial protrusion (50) is arranged along at least part of length of a segment of the retractable seal (1).

14. The retractable rotor seal according to claim 13, **characterized in that** at least one pointed or curved extension piece (5), or at least one axial protrusion (50) is provided with at least one through-hole and/or recess.

15. The retractable rotor seal according to any of claims 12 to 14, **characterized in that** there is at least one sealing fin arranged on the axial protrusion (50).

16. The rotor seal according to claim 12, **characterized in that** on at least one face of its comb (10) is arranged at least one axial groove (500).
